# EUROPEAN PATENT APPLICATION

(11) **EP 4 400 727 A1**
(43) Date of publication of application: **17.07.2024**
(21) Application number: 22883277.0
(22) Date of filing: 16.09.2022
(51) Int. Cl.: F04D 29/12, F16J 15/18, F16J 15/44

(54) **SHAFT SEAL STRUCTURE, COMPRESSOR, AND REFRIGERATION DEVICE**

(30) Priority: 18.10.2021 JP 2021170388
(71) Applicant: DAIKIN INDUSTRIES, LTD., Osaka-shi, Osaka 530-0001 (JP)
(72) Inventor: NISHIMURA, Kosuke, Osaka-shi, Osaka 530-0001 (JP); OMORI, Naomichi, Osaka-shi, Osaka 530-0001 (JP); FUKUDA, Daigo, Osaka-shi, Osaka 530-0001 (JP)
(74) Representative: Goddar, Heinz J.
(86) International application number: PCT/JP2022/034828
(87) International publication number: WO 2023/067967

(57) **Abstract**

A shaft seal structure (90) includes: a shaft seal housing (91) having an insertion hole (92) through which a shaft (41) is inserted; a cylindrical thin plate (93) that is flexible and placed in the insertion hole (91); and a support (97) arranged between the shaft seal housing (91) and the thin plate (93) and elastically supports the thin plate (93). The thin plate (93) is arranged to face the shaft (41) and forms a gap (G2) between the thin plate (93) and the shaft (41). The support (97) keeps a fluid from flowing in the direction along the shaft (41).

## Description

### TECHNICAL FIELD

The present disclosure relates to a shaft seal structure, a compressor, and a refrigeration apparatus.

### BACKGROUND ART

A centrifugal compressor has a shaft seal structure provided around a drive shaft of an electric motor as a divider between portions having a differential pressure, i.e., a high-pressure portion pressurized by the operation of a compression mechanism and the other portions, from each other. A labyrinth seal is generally employed as the shaft seal structure (see, e.g., Patent Document 1). The labyrinth seal is formed by a ring-shaped metal seal member. Protrusions (fins) are arranged on an inner peripheral surface of the seal member at intervals in a direction along the drive shaft. A predetermined gap is left between the protrusions and an outer peripheral surface of the drive shaft.

### CITATION LIST

### PATENT DOCUMENT

Patent Document 1: Japanese Unexamined Patent Publication No. 2010-14051

### SUMMARY OF THE INVENTION

### TECHNICAL PROBLEM

When a radial force is applied to the drive shaft of the centrifugal compressor under transient conditions, the drive shaft may be displaced in the radial direction. Further, when the centrifugal compressor gets hot while running, thermal expansion occurs in the shaft seal structure. For these reasons, when the labyrinth seal is employed as the shaft seal structure, a relatively large gap is required between the protrusions of the seal member forming the labyrinth seal and the drive shaft to keep the protrusions of the seal member from interfering with the drive shaft. This leads to leakage of a relatively large amount of gas from the high pressure side to low pressure side of the centrifugal compressor through the gap of the labyrinth seal.

An object of the present disclosure is to reduce the amount of fluid leakage at a shaft seal structure.

### SOLUTION TO THE PROBLEM

A first aspect of the present disclosure is directed to a shaft seal structure (90). The shaft seal structure (90) of the first aspect includes: a housing (91) having an insertion hole (92) through which a shaft (41) is inserted; a cylindrical thin plate (93) that is flexible and placed in the insertion hole (92); and a support (97) that is arranged between the housing (91) and the thin plate (93) and elastically supports the thin plate (93). The thin plate (93) has an inner peripheral surface facing the shaft (41) with a gap (G2) formed between the inner peripheral surface and the shaft (41). The support (97) keeps a fluid from flowing in a direction along the shaft (41).

According to the first aspect, the cylindrical thin plate (93) is elastically supported on its outer periphery by the support (97) in the insertion hole (92) of the housing (91). When the shaft (41) is displaced in the radial direction, the thin plate (93) is deformed adaptively. The deformed thin plate (93) returns to its original shape by the support of the support (97) when the shaft (41) returns to the original position. The gap (G2) between the shaft (41) and the thin plate (93) is therefore maintained. It is thus possible to reduce the width (d2) of the gap (G2) between the shaft (41) and the thin plate (93). The support (97) keeps a fluid from flowing in the direction along the shaft (41) between the housing (91) and the thin plate (93). It is thus possible to reduce the amount of the fluid leakage at the shaft seal structure (90).

A second aspect of the present disclosure is an embodiment of the first aspect. In the shaft seal structure (90) of the second aspect, the support (97) is made of a mesh member (110).

According to the second aspect, the support (97) is made of a mesh member (110). The higher the density of the wires forming the mesh member (110), the more the amount of a fluid flowing through the support (110) in the direction along the shaft (41) is reduced. The amount of fluid leakage at the shaft seal structure (90) can be adjusted in accordance with the density of the wires forming the mesh member (110).

A third aspect of the present disclosure is an embodiment of the first aspect. In the shaft seal structure (90) of the third aspect, the support (97) includes: a cylindrical elastic member (100) having a plurality of spring elements (101) configured to receive the thin plate (93); and a soft filler (105) that fills a gap between the elastic member (100) and the housing (91) and a gap between the elastic member (100) and the thin plate (93).

According to the third aspect, the support (97) includes the elastic member (100) and the filler (105). The thin plate (93) is elastically supported by the plurality of spring elements (101) of the elastic member (100). The filler (105) fills the space between the elastic member (100) and the housing (91) and the space between the elastic member (100) and the thin plate (93), interfering with the flow of the fluid through the spaces. Since the filler (105) is soft, the filler (105) distorts in accordance with the deformation of the thin plate (93). Thus, when the shaft (91) is displaced in the radial direction, the thin plate (93) is deformed to follow the displacement of the shaft (91), making it possible to maintain the gap (G2) between the shaft (91) and the thin plate (93) with good response.

A fourth aspect of the present disclosure is an embodiment of the first aspect. In the shaft seal structure (90) of the fourth aspect, the support (97) includes a mesh member (110) and a soft filler (115) that fills voids in the mesh member (110).

According to the fourth aspect, the support (97) includes the mesh member (110) and the filler (115). The filler (115) fills the voids in the mesh member (110), making it possible to interfere with the flow of the fluid through the voids in the mesh member (110). Since the filler (115) is soft, the filler (105) distorts in accordance with the deformation of the thin plate (93). Thus, when the shaft (41) is displaced in the radial direction, the thin plate (93) is deformed to follow the displacement of the shaft (41), making it possible to maintain the gap (G2) between the shaft (41) and the thin plate (93) with good response.

A fifth aspect of the present disclosure is directed to a compressor (2). The compressor (2) of the fifth aspect includes: the shaft seal structure (90) of any one of the first to fourth aspects; an electric motor (40) having the shaft (41) sealed by the shaft seal structure (90); a compression mechanism (50) configured to compress a fluid sucked by drive of the electric motor (40); a bearing (60) arranged closer to a rotor (42) of the electric motor (40) than the shaft seal structure (90) located between the compression mechanism (50) and the bearing (60), the bearing (60) rotatably supporting the shaft (41) on an outer periphery of the shaft (41).

According to the fifth aspect, the above-described shaft seal structure (90) is arranged between the compression mechanism (50) and the bearing (60). In the compressor (2) in operation, the pressure is relatively high on the side where the compression mechanism (50) is provided, and is relatively low on the side of the rotor (42) of the electric motor (40). The amount of fluid leakage from the high pressure side to the low pressure side of the compressor (2) is reduced by the shaft seal structure (90). Accordingly, the pressure of the space in which the rotor (42) is arranged can be kept from increasing. It is thus possible to reduce stirring loss (windage loss) in the electric motor (40) and improve the performance of the compressor (2).

A sixth aspect of the present disclosure is an embodiment of the fifth aspect. The compressor (2) of the sixth aspect includes a gas passage (120) through which a cooling gas is supplied to the bearing (60).

According to the sixth aspect, the cooling gas is supplied to the bearing (60) through the gas passage (120). The bearing (60) is cooled by the cooling gas supplied through the gas passage (120). This can reduce the seizing of the bearing (60).

A seventh aspect of the present disclosure is an embodiment of the fifth or sixth aspect. In the compressor (2) of the seventh aspect, the bearing (60) is a foil gas bearing (80). the foil gas bearing (80) includes a flexible top foil (83), forms a gap (G1) between the top foil (83) and the shaft (41), and supports the shaft (41) by a gas film (89) generated in the gap (G1).

According to the seventh aspect, the foil gas bearing (80) is used as the bearing (60) that supports the shaft (41) on the outer periphery. The foil gas bearing (80) includes the top foil (83) which serves as a bearing surface (84), and the foil gas bearing (80) supports a load while allowing deformation of the bearing surface (84). When the shaft (41) rotates, gas is drawn into the gap (G1) between the top foil (83) and the shaft (41) to generate the gas film (89). The gas film (89) floats the shaft (41) from the bearing surface (84) of the top foil (83). Thus, the bearing (60) rotatably supports the shaft (41) in a non-contact manner. The foil gas bearing (80) advantageously reduces frictional heat generated on the bearing surface (84) and the amount of wear of the bearing surface due to the rotation of the shaft (41), and thus is suitable as the bearing (60) for supporting the shaft (41) of the electric motor (40) rotating at high speed.

An eighth aspect of the present disclosure is an embodiment of the seventh aspect. In the compressor (2) of the eighth aspect, a width (d2) of a gap (G2) formed between the thin plate (93) of the shaft seal structure (90) and the shaft (41) is set to be greater than a width (d1) of the gap (G1) between the top foil (83) of the bearing (60) and the shaft (41).

According to the eighth aspect, the width (d2) of the gap (G2) between the thin plate (93) of the shaft seal structure (90) and the shaft (41) is set to be greater than the width (d1) of the gap (G1) between the top foil (83) of the bearing (80) and the shaft (41). This reduces heat generation accompanying the rotation of the shaft (41) in the shaft seal structure (90). This can reduce the seizing of the shaft seal structure (90).

A ninth aspect of the present disclosure is an embodiment of any one of the fifth to eighth aspects. In the compressor (2) of the ninth aspect, a dynamic pressure groove (130a, 130b) is formed in an outer peripheral surface of the shaft (41) facing the thin plate (93), the dynamic pressure groove (130a, 130b) generating a dynamic pressure when gas flows from the rotor (42) to the compression mechanism (50) as the shaft (41) rotates.

According to the ninth aspect, the dynamic pressure groove (140) is formed in the outer peripheral surface of the shaft (41) facing the thin plate (93). When the shaft (41) rotates, the gas flows through the dynamic pressure groove (140) from the rotor (42) to the compression mechanism (50) to generate the dynamic pressure. Thus, the gas can be pushed back from the low pressure side to the high pressure side of the compressor (2) as the shaft (41) rotates. This is advantageous in reducing the amount of gas leakage at the shaft seal structure (90) provided in the compressor (2).

A tenth aspect of the present disclosure is an embodiment of any one of the fifth to ninth aspects. In the compressor (2) of the tenth aspect, a dynamic pressure groove (140a, 140b) is formed in an inner peripheral surface of the thin plate (93), the dynamic pressure groove (140a, 140b) generating a dynamic pressure when gas flows from the rotor (42) to the compression mechanism (50) as the shaft (41) rotates.

According to the tenth aspect, the dynamic pressure groove (140) is formed in the inner peripheral surface of the thin plate (93). When the shaft (41) rotates, the gas flows through the dynamic pressure groove (140) from the rotor (42) to the compression mechanism (50) to generate the dynamic pressure. Thus, the gas can be pushed back from the low pressure side to the high pressure side of the compressor (2) as the shaft (41) rotates. This is advantageous in reducing the amount of gas leakage at the shaft seal structure (90) provided in the compressor (2).

An eleventh aspect of the present disclosure is an embodiment of any one of the fifth to tenth aspects. In the compressor (2) of the eleventh aspect, the thin plate (93) and the support (97) are in contact with each other over an entire circumference.

According to the eleventh aspect, the thin plate (93) and the support (97) are in contact with each other over the entire circumference. Thus, a passage through which the fluid flows in the direction along the shaft (41) can be closed between the thin plate (93) and the support (97). This is advantageous in reducing the amount of fluid leakage at the shaft seal structure (90).

A twelfth aspect of the present disclosure is directed to the compressor of any one of the fifth to eleventh aspects. In the twelfth aspect, the compressor (2) is a centrifugal compressor (2).

According to the twelfth aspect, the compressor (2) is a centrifugal compressor (2). In the centrifugal compressor (2), the compression mechanism (50) includes an impeller (51, 52). The pressure of an impeller chamber (23, 24) that houses the impeller (51, 52) of the centrifugal compressor (2) is relatively high when the impeller (51, 52) rotates. Thus, a seal is required to separate chambers having a differential pressure, i.e., the electric motor chamber (26) that houses the electric motor (40) and the impeller chamber (23, 24), from each other. The above-described shaft seal structure (90) can be effectively used as the seal.

A thirteenth aspect of the present disclosure is an embodiment of any one of the fifth to twelfth aspects. In the compressor (2) of the thirteenth aspect, the gas is any one of an HFC refrigerant, an HFO refrigerant, a refrigerant mixture of the HFC refrigerant and the HFO refrigerant, a CF3I refrigerant, a carbon dioxide refrigerant, or a hydrocarbon refrigerant.

According to the thirteenth aspect, the gas compressed by the compressor (2) is a refrigerant such as an HFC refrigerant. The above-described shaft seal structure (90) can also be effectively used in the compressor (2) for compressing such a refrigerant.

A fourteenth aspect of the present disclosure is directed to a refrigeration apparatus (1). The refrigeration apparatus (1) of the fourteenth aspect includes the compressor (2) of any one of the fifth to thirteenth aspects. The compressor (2) constitutes a refrigerant circuit (10) that circulates a refrigerant to perform a refrigeration cycle.

According to the fourteenth aspect, the compressor (2) described above is used in the refrigerant circuit (10). This contributes to improving efficiency of the refrigeration cycle performed in the refrigeration apparatus (1).

### BRIEF DESCRIPTION OF THE DRAWINGS

FIG. 1 is a schematic configuration diagram of a refrigerant circuit of a refrigeration apparatus of a first embodiment.
FIG. 2 is a vertical cross-sectional view illustrating a schematic configuration of a compressor of the first embodiment.
FIG. 3 is a vertical cross-sectional view illustrating a major part of the compressor of the first embodiment.
FIG. 4 is a transverse cross-sectional view illustrating a schematic configuration of a radial bearing taken along line IV-IV in FIG. 3.
FIG. 5 is a transverse cross-sectional view illustrating a schematic configuration of a shaft seal structure taken along line V-V in FIG. 3.
FIG. 6 is a transverse cross-sectional view of a part corresponding to FIG. 5, illustrating a shaft seal structure of a second embodiment.
FIG. 7 is a transverse cross-sectional view of a part corresponding to FIG. 5, illustrating a shaft seal structure of a third embodiment.
FIG. 8 is a cross-sectional view of a main part illustrating dynamic pressure grooves formed in an outer peripheral surface of a drive shaft of a centrifugal compressor of a first variation.
FIG. 9 is a cross-sectional view of a main part illustrating dynamic pressure grooves formed in an inner peripheral surface of a thin plate of a shaft seal structure of a second variation.
FIG. 10 is a vertical cross-sectional view illustrating a schematic configuration of a compressor of a third variation.

### DESCRIPTION OF EMBODIMENTS

Illustrative embodiments will be described below in detail with reference to the drawings. In the following embodiments, a shaft seal structure of the present disclosure applied to a compressor will be described as an example. The drawings are used for conceptual description of the present disclosure. In the drawings, dimensions, ratios, or numbers may be exaggerated or simplified for easier understanding of the technique of the present disclosure.

### <<First Embodiment>>

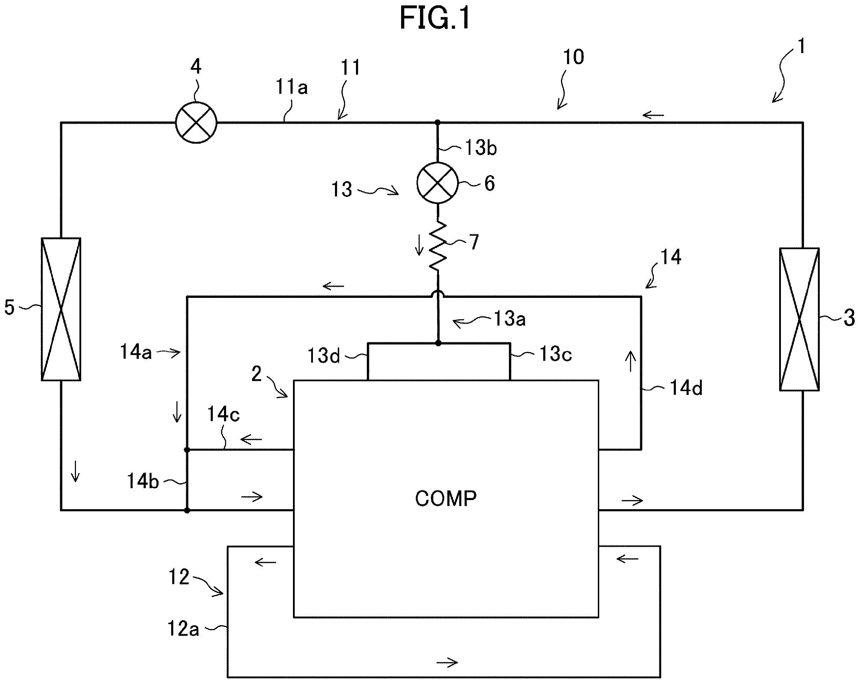

As illustrated in FIG. 1, a compressor (2) of the present disclosure is provided in a refrigeration apparatus (1).

### -Refrigeration Apparatus-

The refrigeration apparatus (1) includes a refrigerant circuit (10). The refrigerant circuit (10) is filled with a refrigerant. A fluid compressed by the compressor (2) of this example is a refrigerant. For example, the refrigerant is any one of a hydrofluorocarbon (HFC) refrigerant, a hydrofluoro-olefin (HFO) refrigerant, a refrigerant mixture of the HFC refrigerant and the HFO refrigerant, a trifluoroiodomethane (CF3I) refrigerant, a carbon dioxide refrigerant, or a hydrocarbon refrigerant.

The refrigerant circuit (10) includes a main circuit (11), an auxiliary circuit (12), a branch circuit (13), and a return circuit (14). The main circuit (11) includes a main pipe (11a), a compressor (2), a radiator (condenser) (3), a first decompression mechanism (4), and an evaporator (5). The compressor (2), the radiator (3), the first decompression mechanism (4), and the evaporator (5) are connected in series by the main pipe (11a). The first decompression mechanism (4) is, for example, an expansion valve. The main circuit (11) allows the refrigerant to circulate to perform a vapor compression refrigeration cycle.

In the refrigeration cycle, the gas refrigerant compressed by the compressor (2) dissipates heat to the air in the radiator (3). At this time, the gas refrigerant is liquefied to become a liquid refrigerant. The liquid refrigerant that has dissipated heat is decompressed by the first decompression mechanism (4). The decompressed liquid refrigerant evaporates in the evaporator (5). At this time, the liquid refrigerant evaporates to become a gas refrigerant. The evaporated gas refrigerant is sucked into the compressor (2). The compressor (2) compresses the sucked gas refrigerant.

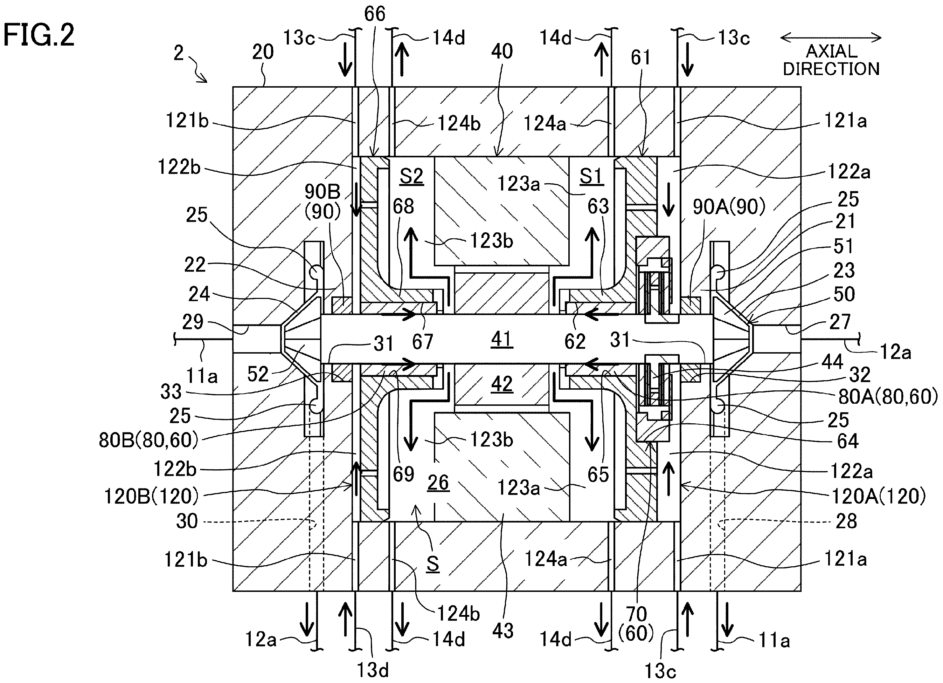

The compressor (2) of this example is a two-stage centrifugal compressor (2). The compressor (2) includes a high-pressure impeller chamber (23) and a low-pressure impeller chamber (24) (see FIG. 2). The high-pressure impeller chamber (23) serves as a high-pressure compression chamber. The low-pressure impeller chamber (24) serves as a low-pressure compression chamber. The compressor (2) compresses the refrigerant in two stages in the high-pressure impeller chamber (23) and the low-pressure impeller chamber (24).

The auxiliary circuit (12) includes an auxiliary pipe (12a). One end of the auxiliary pipe (12a) is connected to the high-pressure impeller chamber (23) of the compressor (2). The other end of the auxiliary pipe (12a) is connected to the low-pressure impeller chamber (24) of the compressor (2). The auxiliary pipe (12a) connects the discharge side of the low-pressure impeller chamber (24) and the suction side of the high-pressure impeller chamber (23). The refrigerant compressed in the low-pressure impeller chamber (24) is sucked into the high-pressure impeller chamber (23) through the auxiliary pipe (12a).

The branch circuit (13) includes a branch pipe (13a), a second decompression mechanism (6), and a heater (7). The branch pipe (13a) is bifurcated in the middle. Specifically, the branch pipe (13a) includes a main branch pipe (13b), a first branch pipe (13c), and a second branch pipe (13d). The main branch pipe (13b) is a common part of the branch pipe (13a) and constitutes one end of the branch pipe (13a). The one end of the branch pipe (13a) is connected to the main pipe (11a) between the radiator (3) and the first decompression mechanism (4).

The first branch pipe (13c) and the second branch pipe (13d) are pipes branched from the main branch pipe (13b) and constitute the other ends of the branch pipe (13a). The other end of the branch pipe (13a) formed by the first branch pipe (13c) is connected to an inlet of a first gas passage (120A) for cooling provided in the compressor (2). The other end of the branch pipe (13a) formed by the second branch pipe (13d) is connected to an inlet of a second gas passage (120B) for cooling provided in the compressor (2).

The second decompression mechanism (6) is provided in the main branch pipe (13b). The second decompression mechanism (6) is, for example, an expansion valve. The heater (7) is arranged on the main branch pipe (13b) of the branch pipe (13a) to be closer to the branch point than the second decompression mechanism (6). The second decompression mechanism (6) and the heater (7) are connected in series by the main branch pipe (13b).

The liquid refrigerant flowing through the main branch pipe (13b) is decompressed by the second decompression mechanism (6). The decompressed liquid refrigerant is heated in the heater (7). At this time, the liquid refrigerant evaporates to become a gas refrigerant. The gas refrigerant is introduced into the first gas passage (120A) through the first branch pipe (13c) and is introduced into the second gas passage (120B) through the second branch pipe (13d).

The return circuit (14) has a return pipe (14a). The return pipe (14a) is bifurcated in the middle. Specifically, the return pipe (14a) includes a main return pipe (14b), a first return pipe (14c), and a second return pipe (14d). The main return pipe (14b) is a common part of the return pipe (14a) and constitutes one end of the return pipe (14a). The one end of the return pipe (14a) is connected to the main pipe (11a) between the evaporator (5) and the compressor (2).

The first return pipe (14c) and the second return pipe (14d) are pipes branched from the main return pipe (14b) and constitute the other ends of the return pipe (14a). The other end of the return pipe (14a) formed by the first return pipe (14c) is connected to an outlet of the first gas passage (120A) provided in the compressor (2). The other end of the return pipe (14a) formed by the second return pipe (14d) is connected to an outlet of the second gas passage (120B) provided in the compressor (2).

The refrigeration apparatus (1) of this embodiment is, for example, an air conditioner. The air conditioner may be a cooling and heating machine that can be switched between cooling and heating. In this case, the refrigerant circuit (10) includes a switching mechanism for switching the direction of circulation of the refrigerant. The switching mechanism is, for example, a four-way switching valve. The air conditioner may be a device for cooling only or a device for heating only.

The refrigeration apparatus (1) may be a water heater, a chiller unit, or a cooling apparatus configured to cool air in an internal space. The cooling apparatus is a device for cooling the air inside a refrigerator, a freezer, or a container.

### -Compressor-

As described above, the compressor (2) constitutes the refrigerant circuit (10). The compressor (2) sucks and compresses a low-pressure gas refrigerant. The compressor (2) discharges the compressed high-pressure gas refrigerant. In the following description, a direction along the drive shaft (41) of the compressor (2) will be referred to as an "axial direction," a direction perpendicular to the axial direction as a "radial direction," and a direction along the periphery of the drive shaft (41) as a "circumferential direction."

As illustrated in FIG. 2, the compressor (2) includes a casing (20), an electric motor (40), a compression mechanism (50), a bearing (60), and a shaft seal structure (90).

### <Casing>

The casing (20) is a substantially cylindrical closed container with both ends closed. The casing (20) is placed with its center line extending substantially horizontally. The casing (20) extends in the axial direction and has an internal space (S). The internal space (S) of the casing (20) is sectioned by a first wall (21) on one side in the axial direction and a second wall (22) on the other side in the axial direction.

Part of the internal space (S) on one side that is outside the first wall (21) in the axial direction constitutes the high-pressure impeller chamber (23). Part of the internal space (S) on the other side that is outside the second wall (22) in the axial direction constitutes the low-pressure impeller chamber (24). An outer peripheral portion of each of the high-pressure impeller chamber (23) and the low-pressure impeller chamber (24) forms a compression space (25).

An intermediate part of the internal space (S) inward of the first wall (21) and the second wall (22) in the axial direction constitutes an electric motor chamber (26). The electric motor chamber (26) is located between the high-pressure impeller chamber (23) and the low-pressure impeller chamber (24). When the compressor (2) is running, the high-pressure impeller chamber (23), the low-pressure impeller chamber (24), and the electric motor chamber (26) have a differential pressure.

The casing (20) is provided with a first suction passage (27), a first discharge passage (28), a second suction passage (29), and a second discharge passage (30). The casing (20) also includes a cooling gas passage (120) for supplying a cooling gas to the bearing (60). The cooling gas of this example is a gas refrigerant supplied to the compressor (2) through the branch circuit (13). The cooling gas passage (120) will be described later.

The first suction passage (27) and the first discharge passage (28) are formed at one end portion of the casing (20), and one end of the first suction passage (27) is connected to the auxiliary pipe (12a). The other end of the first suction passage (27) opens in the center of the high-pressure impeller chamber (23). One end of the first discharge passage (28) is connected to the compression space (25) of the high-pressure impeller chamber (23). The other end of the first discharge passage (28) is connected to the main pipe (11a).

The second suction passage (29) and the second discharge passage (30) are formed at the other end portion of the casing (20). One end of the second suction passage (29) is connected to the main pipe (11a). The other end of the second suction passage (29) opens in the center of the low-pressure impeller chamber (24). One end of the second discharge passage (30) is connected to the compression space (25) of the low-pressure impeller chamber (24). The other end of the second discharge passage (30) is connected to the auxiliary pipe (12a).

### <Electric Motor>

The electric motor (40) is a drive source of the compression mechanism (50). The electric motor (40) is housed in the electric motor chamber (26). The electric motor (40) is, for example, a permanent magnet synchronous motor (PMSM). The electric motor (40) includes a drive shaft (41), a rotor (42), and a stator (43). The electric motor (40) is oriented so that the direction of the axis (X) (axial direction) of the drive shaft (41) is horizontal. The drive shaft (41) is an example of a shaft.

The drive shaft (41) extends in the internal space (S) in a direction along the center axis of the casing (20). The drive shaft (41) is inserted into insertion holes (31) formed in the first wall (21) and the second wall (22). One end of the drive shaft (41) is located in the high-pressure impeller chamber (23). The other end of the drive shaft (41) is located in the low-pressure impeller chamber (24). The drive shaft (41) is a rod-shaped member for driving the compression mechanism (50). The drive shaft (41) is sealed by the shaft seal structure (90).

The rotor (42) is formed in a substantially cylindrical shape. The drive shaft (41) is inserted in the rotor (42). The rotor (42) is fixed to the drive shaft (41). The rotor (42) is arranged substantially coaxially with the drive shaft (41). The rotor (42) is provided with a plurality of permanent magnets. The rotor (42) rotates integrally with the drive shaft (41).

The stator (43) is formed in a generally cylindrical shape. The stator (43) is arranged to surround the outer periphery of the rotor (42). The stator (43) is fixed to an inner wall of the casing (20). The stator (43) is made of a magnetic material, for example, a stack of steel plates. A coil is wound around the stator (43). An inner peripheral surface of the stator (43) faces an outer peripheral surface of the rotor (42) with a predetermined gap (air gap) in the radial direction left between the inner peripheral surface and the outer peripheral surface.

The electric motor (40) rotates the drive shaft (41) by interaction between magnetic flux and current between the rotor (42) and the stator (43). The rotor (42) and the stator (43) divide the electric motor chamber (26) into a first space (S1) and a second space (S2). The first space (S1) is a space near the high-pressure impeller chamber (23). The second space (S2) is a space near the low-pressure impeller chamber (24).

The drive shaft (41) of this example is provided with a thrust plate (44). The thrust plate (44) is located near the high-pressure impeller chamber (23) in the first space (S 1). The thrust plate (44) is formed in an annular shape extending radially outward from a main body (41a) of the drive shaft (41). The thrust plate (44) is a different part from the main body (41a) of the drive shaft (41). The thrust plate (44) may be integrally formed with the main body (41a) of the drive shaft (41).

### <Compression Mechanism>

The compression mechanism (50) compresses the gas refrigerant sucked by the drive of the electric motor (40). The compression mechanism (50) includes a high-pressure impeller (51) and a low-pressure impeller (52). The high-pressure impeller (51) is housed in the high-pressure impeller chamber (23). The high-pressure impeller (51) is fixed to the one end of the drive shaft (41). The low-pressure impeller (52) is housed in the low-pressure impeller chamber (24). The low-pressure impeller (52) is fixed to the other end of the drive shaft (41).

Each of the high-pressure impeller (51) and the low-pressure impeller (52) has a plurality of blades, and is formed in a substantially conical shape. The high-pressure impeller (51) and the low-pressure impeller (52) rotate integrally with the drive shaft (41). When the high-pressure impeller (51) rotates, the gas refrigerant sucked into the high-pressure impeller chamber (23) is compressed in the compression space (25) by centrifugal force. When the low-pressure impeller (52) rotates, the gas refrigerant sucked into the low-pressure impeller chamber (24) is compressed in the compression space (25) by centrifugal force.

The rotation of the high-pressure impeller (51) raises the pressure in the high-pressure impeller chamber (23). This makes the air pressure in the high-pressure impeller chamber (23) relatively high. The air pressure in the electric motor chamber (26) is relatively low at this time. The rotation of the low-pressure impeller (52) raises the pressure in the low-pressure impeller chamber (24). Thus, the air pressure in the low-pressure impeller chamber (24) is an intermediate pressure higher than the air pressure in the electric motor chamber (26) and lower than the air pressure in the high-pressure impeller chamber (23).

### <Bearing>

The compressor (2) includes, as the bearing (60), a thrust bearing (70), a first radial bearing (80A), and a second radial bearing (80B). The thrust bearing (70) and the first radial bearing (80A) are held by a first holding member (61). The first holding member (61) is arranged in the first space (S 1). The second radial bearing (80B) is held by a second holding member (66). The second holding member (66) is arranged in the second space (S2).

The first holding member (61) is formed in a substantially disc shape. An outer peripheral surface of the first holding member (61) is fixed to the inner wall of the casing (20). An insertion hole (62) is formed in the center of the first holding member (61). The drive shaft (41) is inserted into the insertion hole (62). A tubular portion (63) is provided around the insertion hole (62) of the first holding member (61). The tubular portion (63) is located on the side of the first holding member (61) facing the rotor (42).

The first holding member (61) divides the first space (S 1) into two spaces arranged in the axial direction. One of the two spaces constitutes a first upstream passage (122a). The other space constitutes a first downstream passage (123a). The first upstream passage (122a) is located closer to the high-pressure impeller chamber (23) than the first holding member (61). The first downstream passage (123a) is located closer to the rotor (42) than the first holding member (61).

The second holding member (66) is formed in a substantially disc shape. An outer peripheral surface of the second holding member (66) is fixed to the inner wall of the casing (20). An insertion hole (67) is formed in the center of the second holding member (66). The drive shaft (41) is inserted into the insertion hole (67). A tubular portion (68) is provided around the insertion hole (67) of the second holding member (66). The tubular portion (68) is located on the side of the second holding member (66) facing the rotor (42).

The second holding member (66) divides the second space (S2) into two spaces arranged in the axial direction. One of the two spaces constitutes a second upstream passage (122b). The other space constitutes a second downstream passage (123b). The second upstream passage (122b) is located closer to the low-pressure impeller chamber (24) than the second holding member (66). The second downstream passage (123b) is located closer to the rotor (42) than the second holding member (66).

A first housing portion (64) is formed in an end surface of the first holding member (61) facing the high-pressure impeller chamber (23). The first housing portion (64) is an annular recess formed around the opening of the insertion hole (62) of the first holding member (61). The thrust plate (44) is located in the first housing portion (64). The thrust bearing (70), engaged with the thrust plate (44), is fitted in the first housing portion (64) and is fixed to the first holding member (61).

A second housing portion (65) is formed in an inner peripheral surface of the insertion hole (62) of the first holding member (61). The second housing portion (65) is a cylindrical recess that is recessed radially outward. The second housing portion (65) is located closer to the rotor (42) than the first housing portion (64). The first radial bearing (80A) is fitted in the second housing portion (65). The first radial bearing (80A) is fixed to the first holding member (61) in the second housing portion (65).

Each of the first radial bearing (80A) and the thrust bearing (70) is arranged around the drive shaft (41) in the first space (S 1). The first radial bearing (80A) and the thrust bearing (70) are both arranged closer to the rotor (42) than a first shaft seal structure (90A) located between the compression mechanism (50) (the high-pressure impeller (51)) and the first radial bearing (80A) and thrust bearing (70). Each of the first radial bearing (80A) and the thrust bearing (70) rotatably supports drive shaft (41) on the outer periphery of the drive shaft (41).

A third housing portion (69) is formed in an inner peripheral surface of the insertion hole (67) of the second holding member (66). The third housing portion (69) is a cylindrical recess that is recessed radially outward. The second radial bearing (80B) is fitted in the third housing portion (69). The second radial bearing (80B) is fixed to the second holding member (66) in the third housing portion (69).

The second radial bearing (80B) is arranged around the drive shaft (41) in the second space (S2). The second radial bearing (80B) is arranged closer to the rotor (42) than a second shaft seal structure (90B) located between the compression mechanism (50) (the low-pressure impeller (52)) and the second radial bearing (80B). The second radial bearing (80B) rotatably supports the drive shaft (41) on the outer periphery of the drive shaft (41).

### <Thrust Bearing>

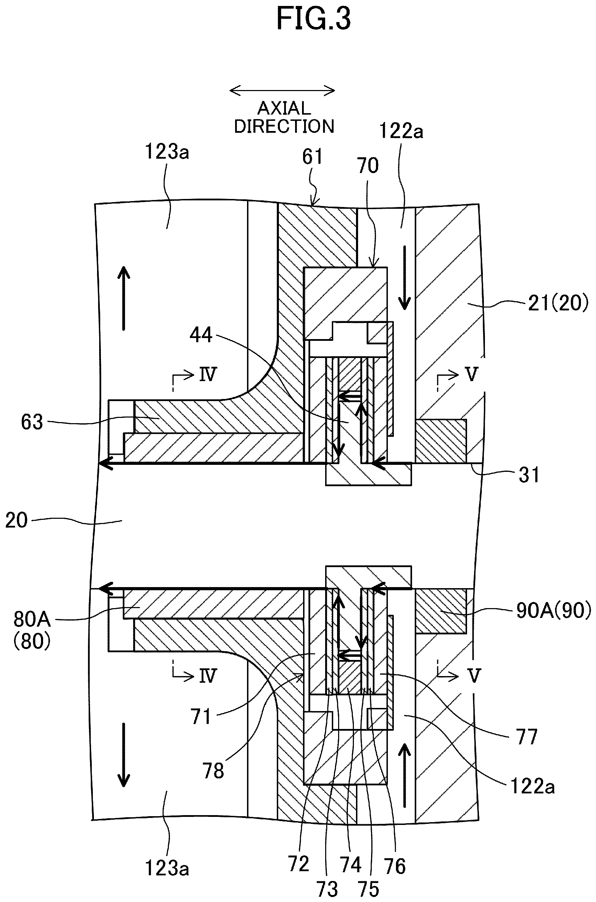

The thrust bearing (70) of this example is a foil gas bearing. As illustrated in FIG. 3, the thrust bearing (70) includes a first base member (71), a first back foil (72), a first top foil (73), a spacer (74), a second top foil (75), a second back foil (76), and a second base member (77). The first base member (71) and the second base member (77) are combined with each other to form a bearing housing (78).

The bearing housing (78) houses the first back foil (72), the first top foil (73), the spacer (74), the second top foil (75), and the second back foil (76). The first top foil (73) and the second top foil (75) are arranged on both sides of the thrust plate (44) in the axial direction. The first back foil (72) is arranged between the first top foil (73) and the first base member (71). The second back foil (76) is arranged between the second top foil (75) and the second base member (77).

The spacer (74) is formed in an annular shape. The spacer (74) is arranged on the outer peripheral side of the thrust plate (44). The spacer (74) is sandwiched between the first top foil (73) and the second top foil (75). The spacer (74) keeps a gap between the first top foil (73) and the second top foil (75). Each of the first top foil (73) and the second top foil (75) is formed in an annular shape. Both of the first top foil (73) and the second top foil (75) are made of a thin metal plate and are flexible.

Each of the first back foil (72) and the second back foil (76) is formed in an annular shape. The first back foil (72) elastically supports the first top foil (73). The second back foil (76) elastically supports the second top foil (75). Both of the first back foil (72) and the second back foil (76) are, for example, bump foils. The bump foil is made of a thin metal plate that is corrugated to function as a soft spring element.

A predetermined gap is set between the first top foil (73) and the thrust plate (44) and between the second top foil (75) and the thrust plate (44). When the drive shaft (41) rotates, gaps are formed between the first top foil (73) and the shaft (41) and between the second top foil (75) and the shaft (41), and gas is drawn into the gaps between the first top foil (73) and the thrust plate (44) and between the second top foil (75) and the thrust plate (44) to generate a gas film. The gas film floats the drive shaft (41) from the first top foil (73) and the second top foil (75). Thus, the thrust bearing (70) supports the drive shaft (41) in a non-contact manner by the gas film.

### <First Radial Bearing and Second Radial Bearing>

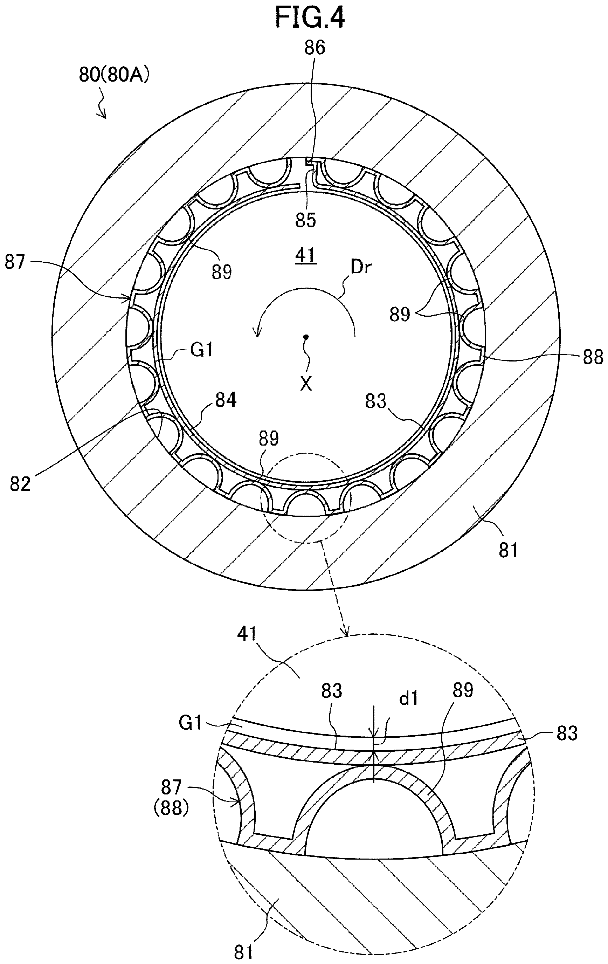

Both of the first radial bearing (80A) and second radial bearing (80B) of this example are foil gas bearings. Radial bearings (80) having the same configuration are used as the first radial bearing (80A) and the second radial bearing (80B). FIG. 4 shows the structure of the radial bearing (80), taking the first radial bearing (80A) as an example. The radial bearing (80) includes a bearing housing (81), a top foil (83), and a back foil (87).

The bearing housing (81) is formed in a cylindrical shape and has an insertion hole (82). The drive shaft (41) is inserted into the insertion hole (82) to pass through the center of the insertion hole (82). The bearing housing (81) houses the top foil (83) and the back foil (87). The top foil (83) and the back foil (87) are arranged in the insertion hole (82). The back foil (87) is located on the inner peripheral side of the insertion hole (82). The top foil (83) is located closer to the center of the insertion hole (82) (closer to the drive shaft (41)).

The top foil (83) is formed in a cylindrical shape. An inner peripheral surface of the top foil (83) faces the outer peripheral surface of the drive shaft (41) and serves as a bearing surface (84). The top foil (83) is a thin metal plate and is flexible. One end of the top foil (83) in the circumferential direction is bent to extend radially outward to form a protruding piece (85). A tip end of the protruding piece (85) is bent to extend in the circumferential direction to form a joint tab (86). The joint tab (86) is joined to the back foil (87). Thus, the top foil (83) is fixed to the back foil (87).

The back foil (87) is formed in a cylindrical shape. The back foil (87) is arranged between the bearing housing (81) and the top foil (83). The back foil (87) is joined to the bearing housing (81) at multiple points by, for example, spot welding. Thus, the back foil (87) is fixed to the bearing housing (81). The back foil (87) elastically supports the top foil (83). The back foil (87) is, for example, a bump foil (88).

The bump foil (88) is made of a thin metal plate that is corrugated to function as a soft spring element. The bump foil (88) is provided with a plurality of protrusions (89) protruding radially inward. The plurality of protrusions (89) are arranged at intervals in the circumferential direction and form a wavy shape. Each of the protrusions (89) constitutes a spring element and receives the top foil (83).

The back foil (87) may be a mesh foil. The mesh foil is made of a metal mesh member. The mesh member is constituted of a mass of wires, such as a metal scrubber (steel wool).

A predetermined gap (G1) is formed between the top foil (83) and the drive shaft (41). The gap (G1) has a width (d1) of, for example, about 10 µm to 50 µm. When the drive shaft (41) rotates, the gap (G1) is formed between the inner peripheral surface of the top foil (87) and the shaft (41), and gas is drawn into the gap (G1) between the top foil (83) and the drive shaft (41) to form a gas film (89). The gas film (89) floats the drive shaft (41) from the top foil (83). Thus, the radial bearing (80) supports the drive shaft (41) in a non-contact manner by the gas film (89).

### <Shaft Seal Structure>

As illustrated in FIG. 2, the compressor (2) includes, as the shaft seal structure (90), a first shaft seal structure (90A) and a second shaft seal structure (90B). The first shaft seal structure (90A) is provided in the first wall (21) around the drive shaft (41). The second shaft seal structure (90B) is provided in the second wall (22) around the drive shaft (41).

A fourth housing portion (32) is formed in an inner peripheral surface of the insertion hole (31) of the first wall (21). The fourth housing portion (32) is an annular recess formed around the opening of the insertion hole (31) facing the electric motor chamber (26). The first shaft seal structure (90A) is housed in the fourth housing portion (32). The first shaft seal structure (90A) seals between the inner peripheral surface of the insertion hole (31) of the first wall (21) and the drive shaft (41), and separates the electric motor chamber (26) (the first space (S1)) and the high-pressure impeller chamber (23) having a differential pressure from each other.

A fifth housing portion (33) is provided in an inner peripheral surface of the insertion hole (31) of the second wall (22). The fifth housing portion (33) is an annular recess formed around the opening of the insertion hole (31) facing the electric motor chamber (26). The fifth housing portion (33) houses the second shaft seal structure (90B). The second shaft seal structure (90B) seals a gap between the inner peripheral surface of the insertion hole (31) of the second wall (22) and the drive shaft (41), and separates the electric motor chamber (26) (the second space (S2)) and the low-pressure impeller chamber (24) having a differential pressure from each other.

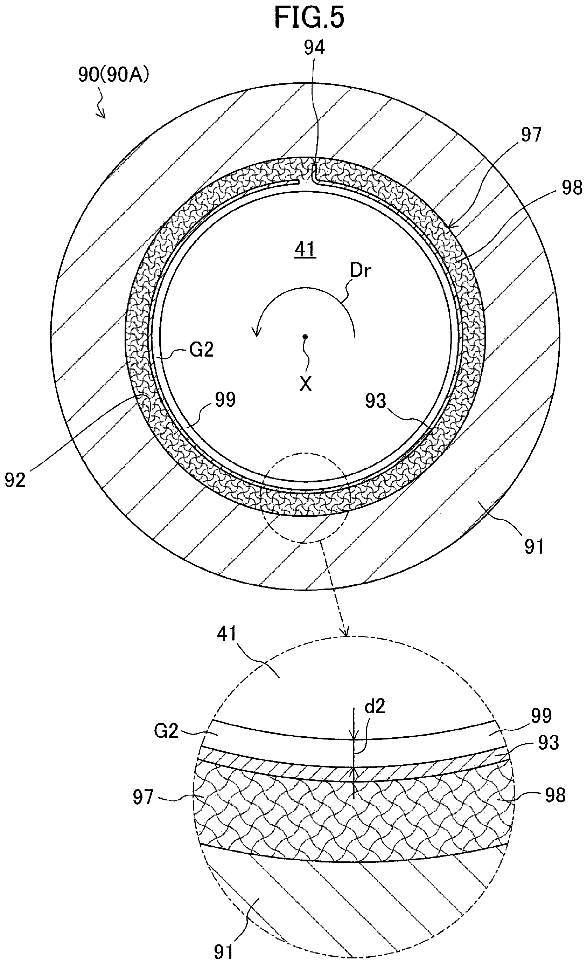

The shaft seal structures (90) having the same configuration are used as the first shaft seal structure (90A) and the second shaft seal structure (90B). FIG. 5 shows the configuration of the shaft seal structure (90), taking the first shaft seal structure (90A) as an example. The shaft seal structure (90) includes a shaft seal housing (91), a thin plate (93), and a support (97).

The shaft seal housing (91) is formed in a cylindrical shape and has an insertion hole (92). The drive shaft (41) is inserted into the insertion hole (92) to pass through the center of the insertion hole (92). The insertion hole (92) houses the thin plate (93) and the support (97). The support (97) is located on the inner peripheral side of the insertion hole (92). The thin plate (93) is located closer to the center of the insertion hole (92) (closer to the drive shaft (41)).

The thin plate (93) is formed in a cylindrical shape. An inner peripheral surface of the thin plate (93) faces the outer peripheral surface of the drive shaft (41). The thin plate (93) is a metal member and is flexible. One end of the thin plate (93) in the circumferential direction is bent to extend radially outward to form a protruding piece (94). The protruding piece (94) enters the support (97). Thus, the thin plate (93) is fixed to the support (97).

The support (97) is formed in a cylindrical shape. The support (97) is arranged between the shaft seal housing (91) and the thin plate (93). The support (97) elastically supports the thin plate (93). The support (97) of this example is made of a metal mesh member (98). The mesh member (98) is constituted of a mass of wires, such as a metal scrubber (steel wool).

The density of the wires of the mesh member (98) forming the support (97) is higher than the density of the wires of the mesh member (88) forming the back foil (87) of the radial bearing (80). The density of the wires of the mesh member (98) forming the support (97) may be about the same as, or lower than, the density of the wires of the mesh member (88) forming the back foil (87). The support (97) having such a configuration keeps the gas from flowing in the axial direction in accordance with the density of the wires.

A predetermined gap (G2) is formed between the thin plate (93) of the shaft seal structure (90) and the drive shaft (41). The gap (G2) between the thin plate (93) and the drive shaft (41) has a width (d2) greater than the width (d1) of the gap (G1) between the top foil (83) of the radial bearing (80) and the drive shaft (41). The width (d2) of the gap (G2) between the thin plate (93) and the drive shaft (41) is, for example, about 50 µm to 100 µm.

When the drive shaft (41) rotates, the gap (G2) is formed between the inner peripheral surface of the thin plate (93) and the shaft (41), and gas is drawn into the gap (G2) between the thin plate (93) and the drive shaft (41) to form a gas film (99). The gas film (99) maintains the gap (G2) between the drive shaft (41) and the thin plate (93). The shaft seal structure (90) seals between the casing (20) (the first wall (21) or the second wall (22)) and the drive shaft (41).

### <Cooling Gas Passage>

As illustrated in FIG. 2, the cooling gas passage (120) of this example is provided as two systems for the first space (S1) and the second space (S2). The gas passages (120) of the two systems are a first gas passage (120A) and a second gas passage (120B). The first gas passage (120A) is a passage for supplying a gas refrigerant to the thrust bearing (70) and the first radial bearing (80A). The second gas passage (120B) is a passage for supplying the gas refrigerant to the second radial bearing (80B).

The first gas passage (120A) includes a first introduction passage (121a) formed in the casing (20), a first upstream passage (122a), a gap between the thrust plate (44) and the thrust bearing (70), a gap between the thrust bearing (70) and the drive shaft (41), a gap between the first radial bearing (80A) and the drive shaft (41), the first downstream passage (123a), and a first discharge passage (124a) formed in the casing (20). The first introduction passage (121a) includes a plurality of first introduction passages (121a), and the first discharge passage (124a) includes a plurality of first discharge passages (124a). The first introduction passage (121a) may be a single first introduction passage (121a), and the first discharge passage (124a) may be a single first discharge passage (124a).

The first introduction passage (121a) introduces the gas refrigerant from the outside into the first space (S1) of the casing (20). One end of the first introduction passage (121a) opens to the outside of the casing (20) and is connected to the first branch pipe (13c). The other end of the first introduction passage (121a) opens in the first upstream passage (122a). The gas refrigerant is discharged from the first space (S 1) of the casing (20) to the outside through the first discharge passage (124a). One end of the first discharge passage (124a) opens in the first downstream passage (123a). The other end of the first discharge passage (124a) opens to the outside of the casing (20) and is connected to the first return pipe (14c).

The gas refrigerant that has flowed through the branch circuit (13) passes through the first branch pipe (13c) into the first introduction passage (121a) and is then introduced into the first upstream passage (122a). The gas refrigerant that has flowed through the first upstream passage (122a) passes through the thrust bearing (70) and the first radial bearing (80A) and flows into the first downstream passage (123a). The gas refrigerant that has flowed through the first downstream passage (123a) is discharged from the first discharge passage (124a) to the first return pipe (14c). The thrust bearing (70) and the first radial bearing (80A) are cooled by the gas refrigerant flowing through the first gas passage (120A).

As indicated by arrows in FIG. 3, the gas refrigerant passing through the thrust bearing (70) and the first radial bearing (80A) flows through the gap between the second base member (77) and the drive shaft (41), the gap between the thrust plate (44) and the second base member (77), the gap between the thrust plate (44) and the spacer (74), the gap between the thrust plate (44) and the first base member (71), the gap between the first base member (71) and the drive shaft (41), and the gap between the first radial bearing (80A) and the drive shaft (41) in this order.

The gap between the thrust plate (44) and the second base member (77) includes the gap between the second top foil (75) and the thrust plate (44) and the gap between the second back foil (76) and the second base member (77). The gap between the thrust plate (44) and the first base member (71) includes the gap between the first top foil (75) and the thrust plate (44) and a gap between the first back foil (76) and the first base member (77).

The second gas passage (120B) includes a second introduction passage (121b) formed in the casing (20), the second upstream passage (122b), a gap between the second radial bearing (80B) and the drive shaft (41), the second downstream passage (123b), and a second discharge passage (124b) formed in the casing (20). The second introduction passage (121b) includes a plurality of second introduction passages (121b), and the second discharge passage (124b) includes a plurality of second discharge passages (124b). The second introduction passage (121b) may be a single second introduction passage (121b), and the second discharge passage (124b) may be a single second discharge passage (124b).

The second introduction passage (121b) introduces the gas refrigerant from the outside into the second space (S2) of the casing (20). One end of the second introduction passage (121b) opens to the outside of the casing (20) and is connected to the second branch pipe (13d). The other end of the second introduction passage (121b) opens in the second upstream passage (122b). The gas refrigerant is discharged from the second space (S2) of the casing (20) to the outside through the second discharge passage (124b). One end of the second discharge passage (124b) opens in the second downstream passage (122b). The other end of the second discharge passage (124b) opens to the outside of the casing (20) and is connected to the second return pipe (14d).

The gas refrigerant that has flowed through the branch circuit (13) passes through the second branch pipe (13d) into the second introduction passage (121b) and is then introduced into the second upstream passage (122b). The gas refrigerant that has flowed through the second upstream passage (122b) passes through the second radial bearing (80B) and flows into the second downstream passage (123b). The gas refrigerant passing through the second radial bearing (80B) flows through the gap between the second radial bearing (80B) and the drive shaft (41). The gas refrigerant that has flowed through the second downstream passage (123b) is discharged from the second discharge passage (124b) to the second return pipe (14d). The second radial bearing (80B) is cooled by the gas refrigerant flowing through the second gas passage (120B).

### -Features of First Embodiment-

In the shaft seal structure (90) of the first embodiment, the cylindrical thin plate (93) is elastically supported on its outer periphery by the support (97) in the insertion hole (92) of the shaft seal housing (91). When the drive shaft (41) is displaced in the radial direction, the thin plate (93) is deformed adaptively. The deformed thin plate (93) returns to its original shape by the support of the support (97) when the drive shaft (41) returns to the original position. The gap (G2) between the drive shaft (41) and the thin plate (93) is therefore maintained. It is thus possible to reduce the width (d2) of the gap (G2) between the drive shaft (41) and the thin plate (93). The support (97) keeps the gas from flowing in the axial direction between the shaft seal housing (91) and the thin plate (93). It is thus possible to reduce the amount of gas leakage at the shaft seal structure (90).

In the shaft seal structure (90) of the first embodiment, the support (97) is made of the mesh member (98). The higher the density of the wires forming the mesh member (98), the more the amount of gas flowing through the support (97) in the axial direction is reduced. The amount of gas leakage at the shaft seal structure (90) can be adjusted in accordance with the density of the wires forming the mesh member (98).

In the compressor (2) of the first embodiment, the first shaft seal structure (90A) is arranged between the high-pressure impeller chamber (23) and the electric motor chamber (26). The first shaft seal structure (90A) reduces the amount of gas leaking from the high-pressure impeller chamber (23) to the electric motor chamber (26). In the compressor (2), the second shaft seal structure (90B) is arranged between the low-pressure impeller chamber (24) and the electric motor chamber (26). The second shaft seal structure (90B) reduces the amount of gas leaking from the low-pressure impeller chamber (24) to the electric motor chamber (26). Accordingly, the pressure of the electric motor chamber (26) in which the rotor (42) is arranged can be kept from increasing. It is thus possible to reduce stirring loss (windage loss) in the electric motor (40) and improve the performance of the compressor (2).

In the compressor (2) of the first embodiment, the gas refrigerant as the cooling gas is supplied to the thrust bearing (70) and the first radial bearing (80A) through the first gas passage (120A). The thrust bearing (70) and the first radial bearing (80A) are cooled by the gas refrigerant supplied through the first gas passage (120A). This can reduce the seizing of the thrust bearing (70) and the first radial bearing (80A).

In the compressor (2) of the first embodiment, the gas refrigerant as the cooling gas is supplied to the second radial bearing (80B) through the second gas passage (120B). The second radial bearing (80B) is cooled by the gas refrigerant supplied through the second gas passage (120B). This can reduce the seizing of the second radial bearing (80B).

In the compressor (2) of the first embodiment, the foil gas bearings are used as the thrust bearing (70), the first radial bearing (80A), and the second radial bearing (80B) that support the outer periphery of the drive shaft (41). The foil gas bearings advantageously reduce frictional heat generated on the bearing surface (84) and the amount of wear of the bearing surface due to the rotation of the drive shaft (41), and thus are suitable as bearings for supporting the drive shaft (41) of the electric motor (40) rotating at high speed.

In the compressor (2) of the first embodiment, the width (d2) of the gap (G2) between the thin plate (93) of the shaft seal structure (90) and the drive shaft (41) is set greater than the width (d1) of the gap (G1) between the top foil (83) of the radial bearing (80) and the drive shaft (41). This reduces heat generation accompanying the rotation of the drive shaft (41) in the shaft seal structure (90). This can reduce the seizing of the shaft seal structure (90).

In the refrigeration apparatus (1) of the first embodiment, the compressor (2) described above is used in the refrigerant circuit (10). This contributes to improving efficiency of the refrigeration cycle performed in the refrigeration apparatus (1).

### <<Second Embodiment>>

A compressor (2) of the second embodiment is different from the compressor of the first embodiment in the configuration of the shaft seal structure (90). The compressor (2) of this example is also used in the refrigeration apparatus (1) similar to that of the first embodiment. In the following embodiments, the compressor (2) is the same as that of the first embodiment except for the configuration of the shaft seal structure (90). Thus, only the shaft seal structure (90) of the compressor (2) having the different configuration will be described, and the same components will not be described in detail.

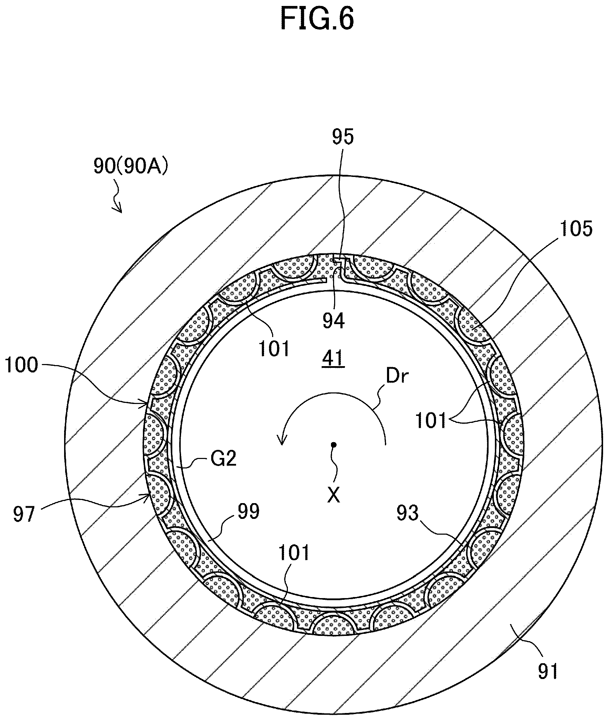

As illustrated in FIG. 6, the shaft seal structure (90) of the second embodiment includes a shaft seal housing (91), a thin plate (93), and a support (97). The shaft seal housing (91) and the thin plate (93) are configured in the same manner as the shaft seal housing (91) and thin plate (93) of the shaft seal structure (90) of the first embodiment. The support (97) of this example includes a bump foil (100) and a soft filler (105). The bump foil (100) is an example of an elastic member.

The bump foil (100) is formed in a cylindrical shape. The bump foil (100) is made of a thin metal plate that is corrugated to function as a soft spring element. The bump foil (100) is provided with a plurality of protrusions (101) protruding radially inward. The plurality of protrusions (101) are arranged at intervals in the circumferential direction and form a wavy shape. Each of the protrusions (101) constitutes a spring element and receives the thin plate (93).

The filler (105) fills a space between the bump foil (100) and the shaft seal housing (91) and a space between the bump foil (100) and the thin plate (93). The filler (105) is, for example, foamed metal and is soft. The foamed metal is a cellular structure which is formed by foaming a metal material and has a large number of cells. The foamed metal used for the filler (105) may be a closed-cell foam in which the cells are independent of each other, or may be an open-cell foam in which the cells are connected to each other.

The support (97) having such a configuration keeps the gas from flowing in the axial direction between the shaft seal housing (91) and the thin plate (93). In the shaft seal structure (90) of this example, a tip end of a protruding piece (94) of the thin plate (93) is bent to form a joint tab (95) extending in the circumferential direction. The protruding piece (94) enters the filler (105). The joint tab (95) is joined to the bump foil (100). Thus, the thin plate (93) is fixed to the support (97).

### -Features of Second Embodiment-

In the shaft seal structure (90) of the second embodiment, the support (97) includes the bump foil (100) and the filler (105). The thin plate (93) is elastically supported by the plurality of protrusions (101) of the bump foil (100). The filler (105) fills the space between the bump foil (100) and the shaft seal housing (91) and the space between the bump foil (100) and the thin plate (93), interfering with the flow of the gas through the spaces. Since the filler (105) is soft, the filler (105) distorts in accordance with the deformation of the thin plate (93). Thus, when the drive shaft (41) is displaced in the radial direction, the thin plate (93) is deformed to follow the displacement of the drive shaft (41), making it possible to maintain the gap (G2) between the drive shaft (41) and the thin plate (93) with good response.

### <<Third Embodiment>>

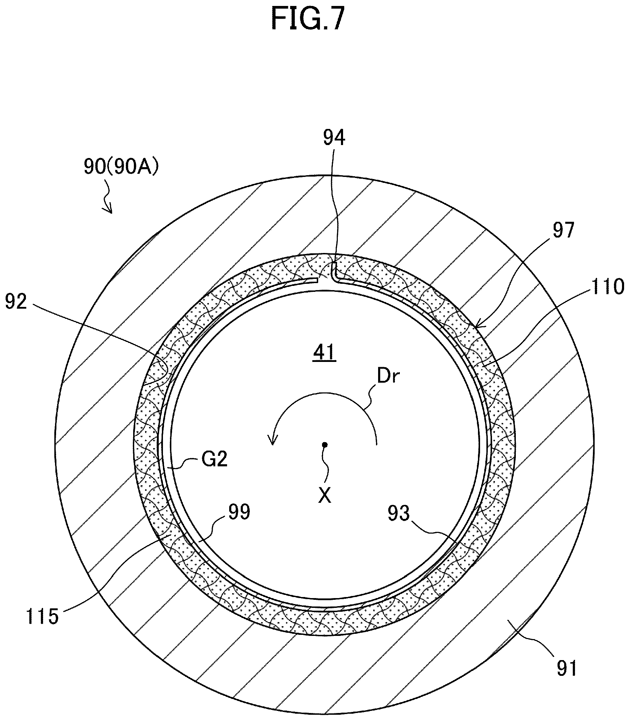

As illustrated in FIG. 7, a shaft seal structure (90) of the third embodiment includes a shaft seal housing (91), a thin plate (93), and a support (97). The shaft seal housing (91) and the thin plate (93) are configured in the same manner as the shaft seal housing (91) and thin plate (93) of the shaft seal structure (90) of the first embodiment. The support (97) of this example includes a metal mesh member (110) and a soft filler (115).

The mesh member (110) is formed in a cylindrical shape. The mesh member (110) is made of wires such as a metal scrubber (steel wool). The density of the wires of the mesh member (110) forming the support (97) is preferably set to be a density that gives the support (97) a rigidity equal to or lower than the rigidity of the bump foil (88) of the radial bearing (80). This configuration allows the first radial bearing (80A) and the second radial bearing (80B) to bear the load from the drive shaft (41) when the drive shaft (41) is further displaced in the radial direction. This can reduce loss of the sealing performance of the shaft seal structure (90) due to the contact between the thin plate (93) and the drive shaft (41). The density of the wires of the mesh member (110) forming the support (97) may be set to be a density that gives the support (97) a higher rigidity than the bump foil (88) of the radial bearing (80).

The filler (115) fills the gaps in the mesh member (110). The filler (115) is, for example, a foamed resin and is soft. The foamed resin is obtained by foaming a synthetic resin and has a cellular structure having a large number of cells. The foamed resin used for the filler (115) is an open-cell foam in which cells are connected to each other. The foamed resin used for the filler (115) may be a closed-cell foam in which the cells are independent of each other.

The support (97) having such a configuration keeps the gas from flowing in the axial direction between the shaft seal housing (91) and the thin plate (93).

### -Features of Third Embodiment-

In the shaft seal structure (90) of the third embodiment, the support (97) includes the mesh member (110) and the filler (115). The filler (115) fills the voids in the mesh member (110), making it possible to interfere with the flow of the gas through the voids in the mesh member (110). Since the filler (115) is soft, the filler (105) distorts in accordance with the deformation of the thin plate (93). Thus, when the drive shaft (41) is displaced in the radial direction, the thin plate (93) is deformed to follow the displacement of the drive shaft (41), making it possible to maintain the gap (G2) between the drive shaft (41) and the thin plate (93) with good response.

### <<Other Embodiments>>

The first to third embodiments may also be configured as follows.

### -First Variation-

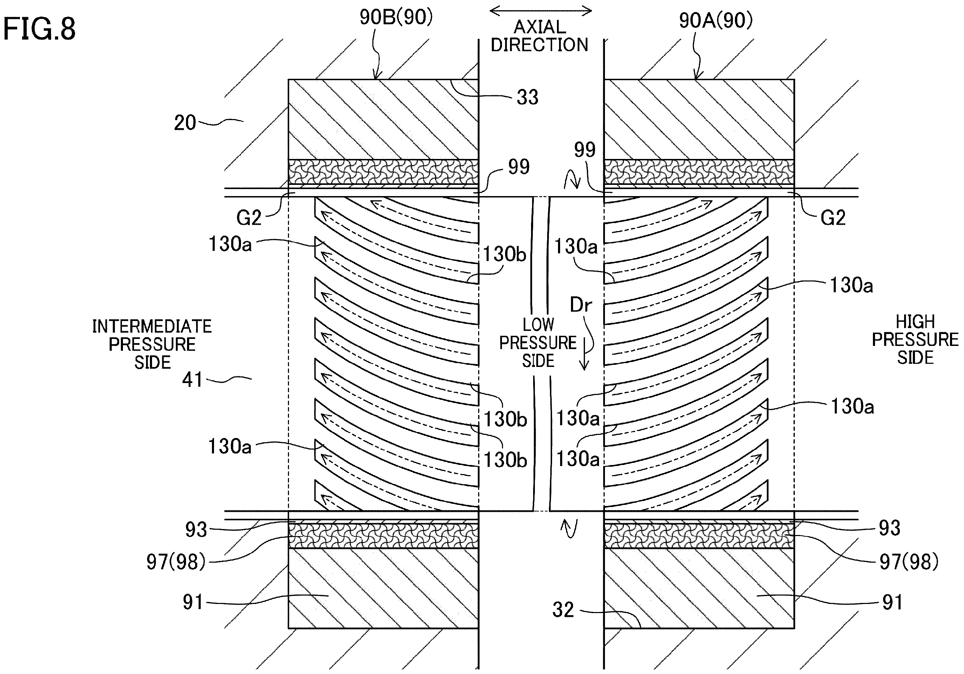

As illustrated in FIG. 8, in the compressor (2) of the first variation, a plurality of first dynamic pressure grooves (130a) is formed in part of the outer peripheral surface of the drive shaft (41) facing the thin plate (93) of the first shaft seal structure (90A). The plurality of first dynamic pressure grooves (130a) are arranged at intervals in the circumferential direction of the drive shaft (41). Each of the first dynamic pressure grooves (130a) extends in a direction inclined toward the opposite to the rotational direction Dr of the drive shaft (41) relative to the axial direction.

The first dynamic pressure groove (130a) of this variation is inclined to draw a curve from the low pressure side toward the high pressure side. One end of each first dynamic pressure groove (130a) opens to the outside of the shaft seal structure (90) on the low pressure side in the axial direction. The other end of each first dynamic pressure groove (130a) is closed inside the shaft seal structure (90) on the high pressure side in the axial direction. Each of the first dynamic pressure grooves (130a) generates dynamic pressure as the drive shaft (41) rotates. As indicated by two-dot-dash-line arrows in FIG. 8, the dynamic pressure is generated when the gas flows through the first dynamic pressure grooves (130a) from the low pressure side to the high pressure side.

A plurality of second dynamic pressure grooves (130b) is formed in part of the drive shaft (41) facing the thin plate (93) of the second shaft seal structure (90B). The plurality of second dynamic pressure grooves (130b) are symmetrical to the plurality of first dynamic pressure grooves (130a) with respect to the rotor (42). The plurality of second dynamic pressure grooves (130b) are arranged at intervals in the circumferential direction of the drive shaft (41). Each of the second dynamic pressure grooves (130b) extends in a direction inclined toward the opposite to the rotational direction of the drive shaft (41) relative to the axial direction.

Each of the second dynamic pressure grooves (130b) of this variation is inclined to draw a curve from the low pressure side toward the intermediate pressure side. One end of each second dynamic pressure groove (130b) opens to the outside of the shaft seal structure (90) on the low pressure side in the axial direction. The other end of each first dynamic pressure groove (130a) is closed inside the shaft seal structure (90) on the intermediate pressure side in the axial direction. Each of the second dynamic pressure grooves (130b) generates dynamic pressure as the drive shaft (41) rotates. As indicated by two-dot-dash-line arrows in FIG. 8, the dynamic pressure is generated when the gas flows through the second dynamic pressure grooves (130b) from the low pressure side to the intermediate pressure side.

In the compressor (2) of the first variation, the first dynamic pressure grooves (130a) are formed in the outer peripheral surface of the drive shaft (41) facing the thin plate (93). When the drive shaft (41) rotates, the gas flows through the first dynamic pressure grooves (130a) from the low pressure side to the high pressure side to generate the dynamic pressure. Thus, the gas can be pushed back from the low pressure side to the high pressure side of the compressor (2) as the drive shaft (41) rotates. This is advantageous in reducing the amount of gas leakage at the first shaft seal structure (90A) provided in the compressor (2).

In the compressor (2) of the first variation, the second dynamic pressure grooves (130b) are formed in the outer peripheral surface of the drive shaft (41) facing the thin plate (93). When the drive shaft (41) rotates, the gas flows through the second dynamic pressure grooves (130b) from the low pressure side to the intermediate pressure side to generate the dynamic pressure. Thus, the gas can be pushed back from the low pressure side to the intermediate pressure side of the compressor (2) as the drive shaft (41) rotates. This is advantageous in reducing the amount of gas leakage at the second shaft seal structure (90B) provided in the compressor (2).

### -Second Variation-

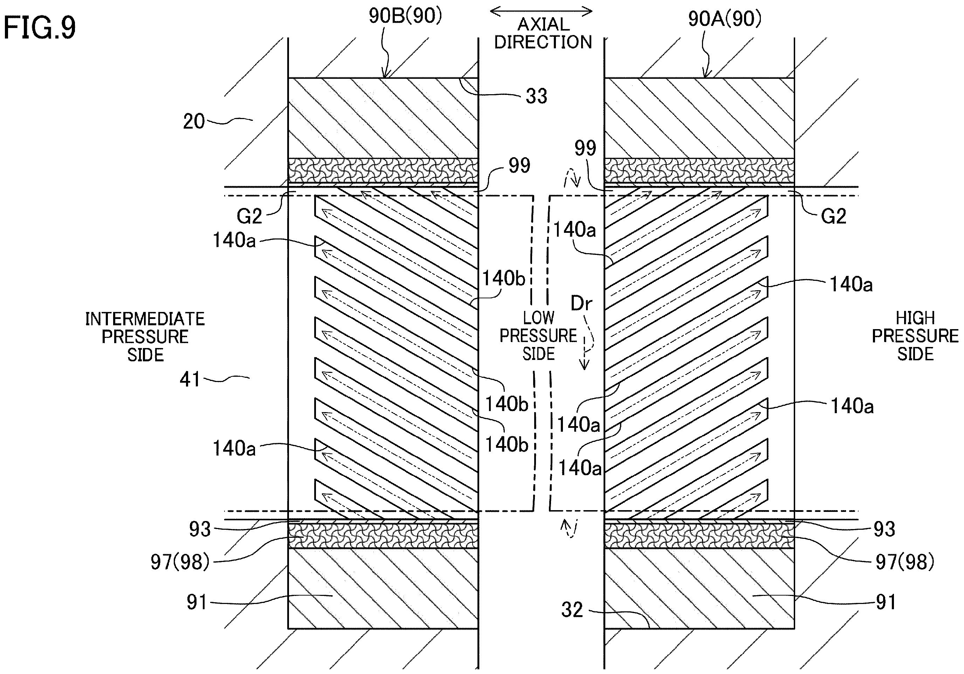

As illustrated in FIG. 9, the compressor (2) of the second variation includes a plurality of first dynamic pressure grooves (140a) formed in the inner peripheral surface of the thin plate (93) of the first shaft seal structure (90A). The plurality of first dynamic pressure grooves (140a) are arranged at intervals in the circumferential direction of the drive shaft (41). Each of the first dynamic pressure grooves (140a) extends in a direction inclined toward the opposite to the rotational direction Dr of the drive shaft (41) relative to the axial direction.

The first dynamic pressure grooves (140a) of this variation are inclined at the same angle over the entire length from the low pressure side to the high pressure side. One end of each first dynamic pressure groove (140a) opens to the outside of the first shaft seal structure (90A) on the low pressure side in the axial direction. The other end of each first dynamic pressure groove (140a) is closed inside the first shaft seal structure (90A) on the high pressure side in the axial direction. Each of the first dynamic pressure grooves (140a) generates dynamic pressure as the drive shaft (41) rotates. As indicated by two-dot-dash-line arrows in FIG. 9, the dynamic pressure is generated when the gas flows through the first dynamic pressure grooves (140a) from the low pressure side to the high pressure side.

A plurality of second dynamic pressure grooves (140b) is formed in the inner peripheral surface of the thin plate (93) of the second shaft seal structure (90B). The plurality of second dynamic pressure grooves (140b) are symmetrical to the first dynamic pressure grooves (140a) with respect to the rotor (42). The plurality of second dynamic pressure grooves (140b) are arranged at intervals in the circumferential direction of the drive shaft (41). Each of the second dynamic pressure grooves (140b) extends in a direction inclined toward the opposite to the rotational direction of the drive shaft (41) relative to the axial direction.

The second dynamic pressure grooves (140b) of this variation are inclined at the same angle over the entire length from the low pressure side to the intermediate pressure side. One end of each second dynamic pressure groove (140b) opens to the outside of the second shaft seal structure (90B) on the low pressure side in the axial direction. The other end of each second dynamic pressure groove (140b) is closed inside the second shaft seal structure (90) on the intermediate pressure side in the axial direction. Each of the second dynamic pressure grooves (140b) generates dynamic pressure as the drive shaft (41) rotates. As indicated by two-dot-dash-line arrows in FIG. 9, the dynamic pressure is generated when the gas flows through the second dynamic pressure grooves (140b) from the low pressure side to the intermediate pressure side.

In the compressor (2) of the second variation, the first dynamic pressure grooves (140a) are formed in the inner peripheral surface of the thin plate (93) of the first shaft seal structure (90A). When the drive shaft (41) rotates, the gas flows through the first dynamic pressure grooves (140a) from the low pressure side to the high pressure side to generate the dynamic pressure. Thus, the gas can be pushed back from the low pressure side to the high pressure side of the compressor (2) as the drive shaft (41) rotates. This is advantageous in reducing the amount of gas leakage at the first shaft seal structure (90A) provided in the compressor (2).

In the compressor (2) of the second variation, the second dynamic pressure grooves (140b) are formed in the inner peripheral surface of the thin plate (93) of the second shaft seal structure (90B). When the drive shaft (41) rotates, the gas flows through the second dynamic pressure grooves (140b) from the low pressure side to the intermediate pressure side to generate the dynamic pressure. Thus, the gas can be pushed back from the low pressure side to the intermediate pressure side of the compressor (2) as the drive shaft (41) rotates. This is advantageous in reducing the amount of gas leakage at the second shaft seal structure (90B) provided in the compressor (2).

### -Third Variation-

In the compressor (2) of the third variation, the thin plate (93) of the shaft seal structure (90) and the support (97) are in contact with each other over the entire circumference. For example, the outer peripheral surface of the thin plate (93) is entirely bonded to the support (97) with an adhesive. The thin plate (93) and the support (97) may be partially bonded to each other as long as they are in contact with each other over the entire circumference.

In the compressor (2) of the third variation, the thin plate (93) of the shaft seal structure (90) and the support (97) are in contact with each other over the entire circumference. Thus, a passage through which the gas flows in the axial direction can be closed between the thin plate (93) and the support (97). This is advantageous in reducing the amount of gas leakage at the shaft seal structure (90).

### -Fourth Variation-

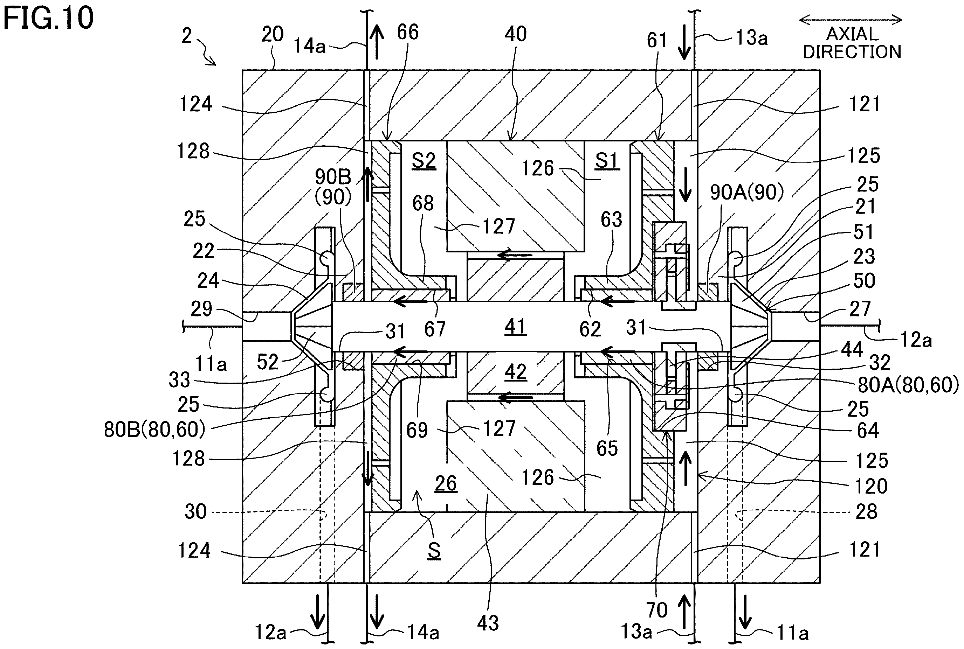

As illustrated in FIG. 10, the cooling gas passage (120) in the compressor (2) is provided as one system which is shared by the first space (S 1) and the second space (S2). The gas passage (120) is a passage for supplying a cooling gas to the thrust bearing (70), the first radial bearing (80A), the electric motor (40), and the second radial bearing (80B).

The gas passage (120) of this variation includes an introduction passage (121) formed in the casing (20), an upstream passage (125), a gap between the thrust plate (44) and the thrust bearing (70), a gap between the thrust bearing (70) and the drive shaft (41), a gap between the first radial bearing (80A) and the drive shaft (41), a first relay passage (126), a gap between the rotor (42) and the stator (43), a second relay passage (127), a gap between the second radial bearing (80B) and the drive shaft (41), a downstream passage (128), and a discharge passage (124) formed in the casing (20). The introduction passage (121) includes a plurality of introduction passages (121), and the discharge passage (124) includes a plurality of discharge passages (124). The introduction passage (121) may be a single introduction passage (121), and the discharge passage (124) may be a single discharge passage (124).

The introduction passage (121) introduces a gas refrigerant as the cooling gas into the electric motor chamber (26) of the casing (20). One end of the introduction passage (121) serves as an inlet that opens to the outside of the casing (20) and is connected to the branch pipe (13a). The other end of the introduction passage (121) opens in the upstream passage (125). The upstream passage (125) is one of two spaces of the first space (S1) divided by the first holding member (61), the one being located closer to the high-pressure impeller chamber (23). The first relay passage (126) is the other of the two spaces located closer to the rotor (42).

The second relay passage (127) is one of two spaces of the second space (S2) divided by the second holding member (66), the one being located closer to the rotor (42). The downstream passage (123) is the other of the two spaces located closer to the low-pressure impeller chamber (24). The gas refrigerant is discharged from the electric motor chamber (26) of the casing (20) to the outside through the discharge passage (124). One end of the discharge passage (124) opens in the downstream passage (128). The other end of the discharge passage (124) serves as an outlet that opens to the outside of the casing (20) and is connected to the return pipe (14a).

The gas refrigerant that has flowed through the branch circuit (13) passes through the branch pipe (13a) into the introduction passage (121) and is then introduced into the upstream passage (125) as the cooling gas. The gas refrigerant that has flowed through the upstream passage (125) flows into the first relay passage (126) through the thrust bearing (70) and the first radial bearing (80A). The gas refrigerant that has flowed through the first relay passage (126) flows into the second relay passage (127) through the gap between the rotor (42) and the stator (43).

The gas refrigerant that has flowed through the second relay passage (127) flows into the downstream passage (128) through the second radial bearing (80B). The gas refrigerant that has flowed through the downstream passage (128) is discharged from the discharge passage (124) to the return pipe (14a). The thrust bearing (70), the first radial bearing (80A), and the second radial bearing (80B) are cooled by the gas refrigerant flowing through the gas passage (120).

The gas refrigerant passing through the thrust bearing (70), the first radial bearing (80A), the electric motor (40), and the second radial bearing (80B) flows through the gap between the second base member (77) and the drive shaft (41), the gap between the thrust plate (44) and the second base member (77), the gap between the thrust plate (44) and the spacer (74), the gap between the thrust plate (44) and the first base member (71), the gap between the first base member (71) and the drive shaft (41), the gap between the first radial bearing (80A) and the drive shaft (41), the gap between the rotor (42) and the stator (43), and the gap between the second radial bearing (80B) and the drive shaft (41) in this order.

In the compressor (2) of the fourth variation, the cooling gas passage (120) is shared by the first space (S1) and the second space (S2). This is advantageous in simplifying the structure of the cooling gas passage (120), as compared with the gas passages (120) provided separately for the first space (S1) and the second space (S2). The gas passage (120) includes the gap between the rotor (42) and the stator (43). Thus, not only the bearing (60) but also the electric motor (40) can be cooled by the gas refrigerant flowing through the gas passage (120).

While the embodiments and variations thereof have been described above, it will be understood that various changes in form and details may be made without departing from the spirit and scope of the claims. The foregoing embodiments and variations thereof may be combined and replaced with each other without deteriorating the intended functions of the present disclosure.

For example, in the first embodiment, the refrigerant circulating in the refrigerant circuit (10) is used as the cooling gas for cooling the bearing (60), but the cooling gas is not limited to this example. The cooling gas flowing through the cooling gas passage (120) may be a refrigerant circulating in a gas circuit which is independent of the refrigerant circulating in the refrigerant circuit (10) or any other suitable cooling gas.

In the second embodiment, the bump foil (100) having a plurality of protrusions (101) has been described as an example of the elastic member serving as the support (97) of the shaft seal structure (90), but elastic member is not limited to this example. The bump foil (100) may be made of any other component, such as a thin plate having a plurality of cantilever springlike plate pieces as spring elements. The bump foil (100) is merely an example of the elastic member, and a cylindrical object having a plurality of spring elements configured to receive the thin plate can be used as the elastic member.

In the first embodiment, the two-stage centrifugal compressor (2) has been described as the compressor (2), but the compressor (2) is not limited to this example. The compressor (2) may be a single-stage centrifugal compressor or any other turbo compressors such as an axial compressor. The shaft seal structure (90) is applicable not only to the compressor (2) but also to a rotary machine having a shaft.

In the first embodiment, the gas has been described as the object to be sealed by the shaft seal structure (90) of the present disclosure, but the object is not limited to the gas. The shaft seal structure (90) of the present disclosure seals not only the gas but also all fluids including liquid. For example, the shaft seal structure (90) of the present disclosure is also applicable to a pump or a water turbine that moves liquid.

The expressions of "first," "second," "third," ... described above are used to distinguish the words to which these expressions are given, and do not limit the number and order of the words.

### INDUSTRIAL APPLICABILITY

As described above, the present disclosure is useful for a shaft seal structure, a compressor, and a refrigeration apparatus.

### DESCRIPTION OF REFERENCE CHARACTERS

- G 1: Gap
- G2: Gap
- 1: Refrigeration Apparatus
- 2: Compressor
- 10: Refrigerant Circuit
- 40: Electric Motor
- 41: Drive Shaft (Shaft)
- 42: Rotor
- 50: Compression Mechanism
- 60: Bearing
- 80: Radial Bearing (Foil Gas Bearing)
- 83: Top Foil
- 89: Gas Film
- 90: Shaft Seal Structure
- 92: Insertion Hole
- 91: Shaft Seal Housing (Housing)
- 93: Thin Plate
- 97: Support
- 98: Mesh Member
- 100: Bump Foil (Elastic Member)
- 105: Filler
- 110: Mesh Member
- 115: Filler
- 120: Gas Passage
- 130a: First Dynamic Pressure Groove (Dynamic Pressure Groove)
- 130b: Second Dynamic Pressure Groove (Dynamic Pressure Groove)
- 140a: First Dynamic Pressure Groove (Dynamic Pressure Groove)
- 140b: Second Dynamic Pressure Groove (Dynamic Pressure Groove)

## Claims

1. A shaft seal structure, comprising:
a housing (91) having an insertion hole (92) through which a shaft (41) is inserted;
a cylindrical thin plate (93) that is flexible and placed in the insertion hole (92); and
a support (97) that is arranged between the housing (91) and the thin plate (93) and elastically supports the thin plate (93),
the thin plate (93) having an inner peripheral surface facing an outer peripheral surface of the shaft (41) with a gap (G2) formed between the inner peripheral surface and the shaft (41),
the support (97) keeping a fluid from flowing in a direction along the shaft (41).

2. The shaft seal structure of claim 1, wherein
the support (97) is made of a mesh member (98).

3. The shaft seal structure of claim 1, wherein
the support (97) includes: a cylindrical elastic member (100) having a plurality of spring elements (101) configured to receive the thin plate (93); and a soft filler (105) that fills a gap between the elastic member (100) and the housing (91) and a gap between the elastic member (100) and the thin plate (93).

4. The shaft seal structure of claim 1, wherein
the support (97) includes a mesh member (110) and a soft filler (115) that fills voids in the mesh member (110).

5. A compressor, comprising:
the shaft seal structure (90) of any one of claims 1 to 4;
an electric motor (40) having the shaft (41) sealed by the shaft seal structure (90);
a compression mechanism (50) configured to compress a fluid sucked by drive of the electric motor (40); and
a bearing (60) arranged closer to a rotor (42) of the electric motor (40) than the shaft seal structure (90) located between the compression mechanism (50) and the bearing (60), the bearing (60) rotatably supporting the shaft (41) on an outer periphery of the shaft (41).

6. The compressor of claim 5, comprising:
a gas passage (120) through which a cooling gas is supplied to the bearing (60).

7. The compressor of claim 5 or 6, wherein
the bearing (60) is a foil gas bearing (80),
the foil gas bearing (80)
includes a flexible top foil (83),
forms a gap (G1) between the top foil (83) and the shaft (41), and
supports the shaft (41) by a gas film (89) generated in the gap (G1).

8. The compressor of claim 7, wherein
a width (d2) of a gap (G2) formed between the thin plate (93) of the shaft seal structure (90) and the shaft (41) is set to be greater than a width (d1) of the gap (G1) between the top foil (83) of the bearing (80) and the shaft (41).

9. The compressor of any one of claims 5 to 8, wherein
a dynamic pressure groove (130a, 130b) is formed in an outer peripheral surface of the shaft (41) facing the thin plate (93), the dynamic pressure groove (130a, 130b) generating a dynamic pressure when gas flows from the rotor (42) to the compression mechanism (50) as the shaft (41) rotates.

10. The compressor of any one of claims 5 to 9, wherein
a dynamic pressure groove (140b, 140b) is formed in an inner peripheral surface of the thin plate (93), the dynamic pressure groove (140b, 140b) generating a dynamic pressure when gas flows from the rotor (42) to the compression mechanism (50) as the shaft (41) rotates.

11. The compressor of any one of claims 5 to 10, wherein
the thin plate (93) and the support (97) are in contact with each other over an entire circumference.

12. The compressor of any one of claims 5 to 11, which is a centrifugal compressor (2).

13. The compressor of any one of claims 5 to 12, wherein
the gas is any one of an HFC refrigerant, an HFO refrigerant, a refrigerant mixture of the HFC refrigerant and the HFO refrigerant, a CF3I refrigerant, a carbon dioxide refrigerant, or a hydrocarbon refrigerant.

14. A refrigeration apparatus, comprising the compressor (2) of any one of claims 5 to 13,
the compressor (2) constituting a refrigerant circuit (10) that circulates a refrigerant to perform a refrigeration cycle.
